**Europäisches Patentamt**

**European Patent Office**

**Office européen des brevets**

(19)

(11) Veröffentlichungsnummer : **0 123 067**
**B1**

(12)                    **EUROPÄISCHE PATENTSCHRIFT**

(45) Veröffentlichungstag der Patentschrift :
19.08.87

(51) Int. Cl.⁴ : **A 01 B 61/04**

(21) Anmeldenummer : **84102199.1**

(22) Anmeldetag : **01.03.84**

(54) **Steinsicherungsvorrichtung für Drehpflüge.**

(30) Priorität : 23.03.83 DE 3310613

(43) Veröffentlichungstag der Anmeldung :
**31.10.84 Patentblatt 84/44**

(45) Bekanntmachung des Hinweises auf die Patenterteilung : **19.08.87 Patentblatt 87/34**

(84) Benannte Vertragsstaaten :
**AT DE FR GB SE**

(56) Entgegenhaltungen :
**EP-A- 0 037 848**
**DE-U- 7 837 386**
**FR-A- 2 428 381**
**FR-A- 2 438 958**
**FR-A- 2 471 123**

(73) Patentinhaber : **H. Niemeyer Söhne GmbH & Co. KG**
**Heinrich-Niemeyer-Strasse 52**
**D-4446 Hörstel (DE)**

(72) Erfinder : **Barlage, Bruno, Dipl.-Ing.**
**Beethovenstrasse 13**
**D-4446 Hörstel (DE)**
Erfinder : **Laumann, Bernhard**
**Lindenstrasse 6**
**D-4446 Hörstel (DE)**

(74) Vertreter : **Busse & Busse Patentanwälte**
**Postfach 1226 Grosshandelsring 6**
**D-4500 Osnabrück (DE)**

EP 0 123 067 B1

**Beschreibung**

Die Erfindung betrifft eine Steinsicherungsvorrichtung für Drehpflüge gemäß dem Oberbegriff des Anspruchs 1.

Bei einer derartigen Steinsicherungsvorrichtung (DE-Gbm 78 37 386) dient das Koppelgetriebe dazu, ein Ansteigen des auf ein Schar wirkenden Rückstellmomentes zu verhindern, wenn der Grindel aufgrund des Auftreffens des Schares auf ein besonderes Hindernis im Boden eine Ausschwenkbewegung in eine Ausweichstellung ausführt und dabei die bereits vorgespannte Schraubendruckfeder weiter zusammengedrückt wird. Bei der bekannten Steinsicherungsvorrichtung bestimmt allein die Bemessung der Teile den in Montageendstellung dieser Teile und in Betriebsstellung des Grindels durch Vorspannen der Schraubendruckfeder von dieser erzeugten Betriebswert der Rückstellkraft, der demzufolge nur durch werkseitige Auslegungsänderung veränderbar ist. Dies bedeutet zugleich eine erhebliche Erschwerung der Montage der Steinsicherungsvorrichtung, da während der Montage die Schraubendruckfeder im Grindel vorgespannt und bis zum Abschluß der Montage unter Vorspannung gehalten werden muß. Montage und Demontage der Teile der Steinsicherungsvorrichtung sind daher wegen des Aufwandes und der benötigten Hilfsgeräte dem Hersteller oder Werkstattpersonal vorbehalten.

Der Erfindung liegt die Aufgabe zugrunde, eine Steinsicherungsvorrichtung der im Oberbegriff des Anspruchs 1 angegebenen Art zu schaffen, die schnell und einfach zusammenbau- und zerlegbar sowie hinsichtlich des Betriebswertes der von der Schraubendruckfeder erzeugten Rückstellkraft einstellbar ist. Die Erfindung löst diese Aufgabe mit den Merkmalen des kennzeichnenden Teils des Anspruchs 1. Hinsichtlich weiterer Ausgestaltungen wird auf die Ansprüche 2 bis 9, verwiesen.

Die erfindungsgemäße Steinsicherungsvorrichtung erlaubt bei großer baulicher Einfachheit ihrer Teile deren Montage bei vollständig entspannter Schraubendruckfeder und deren anschließende Vorspannung zur Erzeugung einer von ihr erzeugten Rückstellkraft, wie sie als Betriebswert in Ansehung der jeweiligen Bodenverhältnisse erwünscht ist. Die Einstellung bzw. Veränderung des Betriebswertes der Rückstellkraft der Schraubendruckfeder kann von jedem Landwirt schnell und lediglich mit Hilfe eines Schraubenschlüssels vorgenommen werden. Dieser kann in gleicher Weise auch die Schraubendruckfeder in Nichtgebrauchszeiten des Drehpfluges vollständig entspannen, um Ermüdungserscheinungen entgegenzuwirken oder unter erleichterten Bedingungen Reparaturarbeiten ausführen zu können.

Mehrere Ausführungsbeispiele des Gegenstands der Erfindung sind in der Zeichnung näher veranschaulicht. In der Zeichnung zeigen :

Figur 1 eine Teilseitenansicht eines Drehpfluges, teilweise im Schnitt, mit einer ersten Steinsicherungsvorrichtung gemäß der Erfindung,

Figur 2 eine abgebrochene Draufsicht, teilweise im Schnitt, auf den Grindel mit der Steinsicherungsvorrichtung gemäß Fig. 1 in Betriebsstellung der Teile,

Figur 3 eine Draufsicht, teilweise im Schnitt auf den Endbereich des Grindels und der Steinsicherungsvorrichtung gemäß Fig. 2 in vergrößerter Darstellung, zur Veranschaulichung der Teile in der Ausschwenkendstellung des Grindels,

Figur 4 eine abgebrochene Draufsicht auf den vorderen Endbereich des Grindels gemäß Fig. 2, in vergrößerter Darstellung,

Figur 5 eine Draufsicht, teilweise im Schnitt, ähnlich Fig. 3 auf den rückwärtigen Endbereich eines Grindels mit einer zweiten Ausführungsform der Steinsicherungsvorrichtung in Betriebsstellung der Teile.

Die in der Zeichnung veranschaulichte Steinsicherungsvorrichtung ist für Drehpflüge bestimmt, die zumindest einen rohrförmigen Grindel 1 aufweisen, der an seinem in Pflugbewegungsrichtung vorderen Ende über eine Anschlußvorrichtung 2 am Pflugrahmen 3 angelenkt ist. Der Grindel 1 trägt in gegenüberliegender Anordnung zwei Pflugschare 4, von denen lediglich das jeweils in Betrieb befindliche Schar dargestellt ist. Die Verbindung der Schare 4 mit dem Grindel 1 erfolgt über flacheisenförmige Schäfte 5, die durch Schrauben 6, 7 an Knotenblechen 8 am Grindel 1 festgelegt sind. Dabei kann eine der Schrauben, z. B. die Schraube 7, als Schersicherung ausgebildet sein.

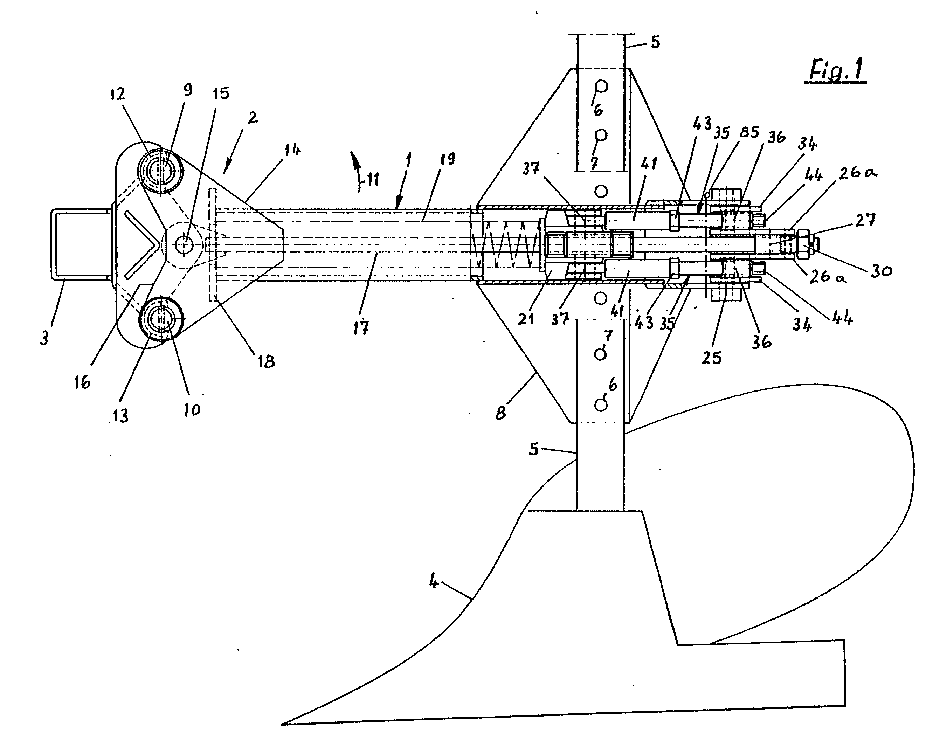

Die Anschlußvorrichtung 2 umfaßt zwei grindelseitig festgelegte, horizontale, symmetrisch zur Längsmittelachse des Grindels 1 oberhalb und unterhalb dieser verlaufende Gelenkbolzen 9, 10, von denen der Gelenkbolzen 9 für die dargestellte Betriebsstellung der Teile jene Gelenkachse definiert, um die der Grindel 1 gegen die Wirkung einer Rückstellkraft in eine Ausweichstellung aus- bzw. hochschwenken kann, und zwar in Richtung des Pfeiles 11 in Fig. 1. Desgleichen definiert der Gelenkbolzen 10 die Gelenkachse für ein Ausschwenken des Grindels in einer Wendestellung der Teile des Drehpfluges. Jeder Gelenkbolzen 9, 10 ist in der Betriebsstellung der Teile gemäß Fig. 1 in einer fest mit dem Rahmen 3 verbundenen Lagerhalbschale 12 bzw. 13 gelagert, welche ihren Gelenkbolzen 9 bzw. 10 im Bereich der vorderen Hälfte umgreift. Um die zwischen den Knotenblechen 14 am vorderen Ende des Grindels 1 befestigten Gelenkbolzen 9, 10 in ihre Lagerhalbschale 12, 13 hineinzudrücken, ist ein bei 15 an einem Teil 16 des Pflugrahmens 3 gelenkig angreifender Zuganker 17 vorgesehen, der stabförmig ausgebildet ist und sich in den Grindel 1 hineinerstreckt. Dabei durchquert er eine vordere, mit einer Durchführungsöffnung versehene Abschlußplatte 18 am vorderen Ende des rohrförmigen Hauptteils des Grindels 1, die zugleich ein vorderes Widerlager für eine im Grindel 1 angeordnete Schraubendruckfeder 19 bildet. Diese Schraubendruckfeder 19 erstreckt sich koaxial im Grindel 1 über den größten Teil dessen Länge und liegt mit ihrem rückwärtigen Ende an einem Druckstück 20 an, das im Grindel 1 längsverschieblich abgestützt und geführt ist. Dieses Druckstück 20 ist bei dem dargestellten Beispiel als Schiebekörper ausgeführt, der allseits Gleitführungsansätze 21 für eine Abstützung an der Innenwandung des Grindels 1 besitzt und ferner eine Durchführungsöffnung 22 mit großer lichter Weite besitzt. Hat der Grindel, wie bei den dargestellten Ausführungsbeispielen, einen quadratischen bzw. rechtwinkligen Querschnitt, so hat auch das Druckstück 20 eine entsprechende, angepaßte Querschnittskontur und ist auf allen vier Seiten mit den Gleitansätzen 21 versehen. Bei beispielsweise kreisförmigem Querschnitt des Grindels 1 würde das Druckstück 20 als Teil ringförmiger Kontur ausgebildet sein.

Das rückwärtige Ende des durch das Druckstück 20 hindurchgeführten Zugankers 17 und das Druckstück 20 sind kraftwirkungsmäßig über ein Koppelgetriebe gekoppelt, das bei der Ausführung gemäß Fig. 1 bis 4 mit 23 bezeichnet ist.

Bei der Ausführung gemäß Fig. 1 bis 4 umfaßt das Koppelgetriebe 23 einen zweiarmigen Übertragungshebel 24, der um eine ortsfeste Achse 25 schwenkbar nahe dem rückwärtig offenen und aus Platzgründen etwas erweiterten Endteils 26 des Grindels 1 schwenkbar gelagert ist. Der Übertragungshebel 24 ist als Doppelelement ausgebildet und umfaßt einen von zwei Plattenteilen 26a gebildeten ersten Hebelarm, der an einem ersten Angriffspunkt 27 mit dem Zuganker 17 über ein Gelenkstück 28 verbunden ist, das die Grundform eines Gelenkbolzens aufweist, der sich zwischen den Plattenteilen 26a erstreckt und an diesen gelagert ist. Der Gelenkbolzen 28 ist mit einer Durchführungsbohrung 29 versehen, durch die der Zuganker 17 hindurchgeführt ist. An seinem rückwärts über den Gelenkbolzen 28 vorstehenden Ende besitzt der Zuganker 17 ein Schraubgewinde, auf dem eine in ihren Stellungen festlegbare Stellmutter 30 vorgesehen ist. Diese Stellmutter 30 wirkt auf ein das freie Ende des Zugankers 17 umgebendes Übertragungsstück 31 ein, das andererseits am Gelenkbolzen 28 anliegt. Die als Kronenmutter ausgebildete Stellmutter 30 dient dazu, die Betriebsstellung des Übertragungshebels 24 festzulegen, d. h. jene Ausgangsstellung des Übertragungshebels 24 zum Grindel 1, 26, die der Übertragungshebel in Betriebsstellung des Grindels, d. h. vor irgendeinem Ausschwenken desselben, einnehmen soll.

Die beiden Plattenteile 26a des ersten Hebelarms des Übertragungshebel 24 sind untereinander im Bereich eines Gelenkauges 32 fest verbunden, das an seiner Unterseite bei 33 eine den Freiraum für den Durchgang des Zugankers 17 vergrößernde Abflachung 33 besitzt. Zwischen dieser Abflachung 33 und der ihr zugekehrten Seite des Zugankers 17 soll in der Betriebsstellung des Übertragungshebels 24 ein Spalt verbleiben, dessen Breite durch eine Lehre abgefühlt und zur Einstellung der Betriebsstellung des Übertragungshebels 24 mit Hilfe der Stellmutter 30 genutzt werden kann.

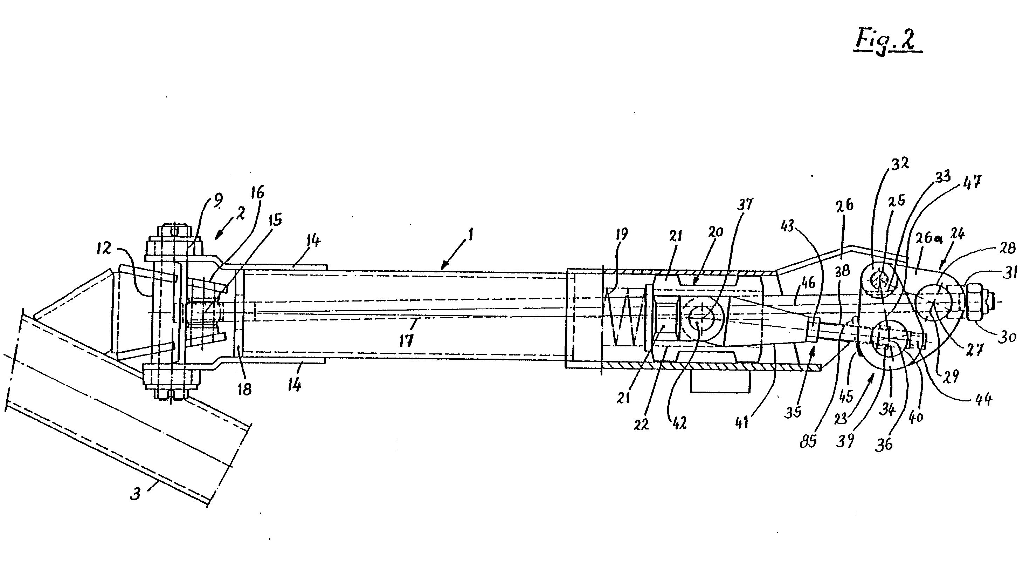

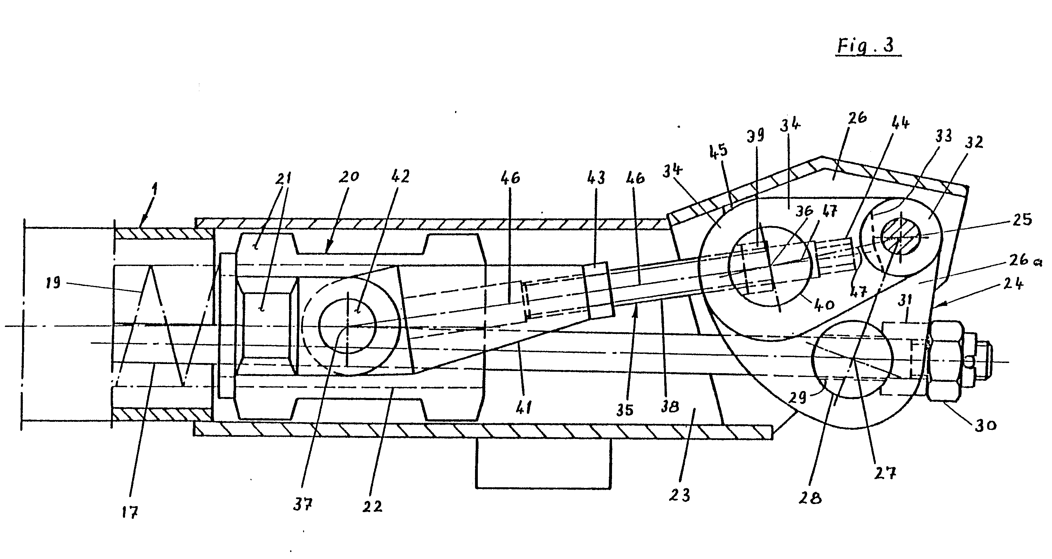

Der Übertragungshebel 24 umfaßt ferner einen zweiten Hebelarm, und zwar ebenfalls in Doppelausführung, d. h. auf jeder Außenseite der Plattenteile 26a des ersten Hebelarms. Auch der zweite Hebelarm besteht aus im Abstand parallel neben den Plattenteilen 26a gelegenen Plattenteilen 34, die mit den Plattenteilen 26a im Bereich des Gelenkauges 32 fest verbunden sind. Zwischen jedem Plattenteil 34 und dem ihm benachbarten Plattenteil 26a befindet sich dementsprechend ein Durchgangsspalt, in den ein Verbindungslenker 35 eingreift. Dieser Verbindungslenker 35 greift am Übertragungshebel 24 an einem zweiten Angriffspunkt 36 gelenkig an und ist an seinem anderen Ende an einem dritten Angriffspunkt 37 gelenkig mit dem Druckstück 20 verbunden. Der Übertragungshebel 24 ist hinsichtlich der Hebellängen seiner Hebelarme und der Lage der Angriffspunkte 27, 36 zur Achse 25 so gestaltet, daß bei einer Ausschwenkbewegung des Grindels 1 in Richtung des Pfeiles 11 in Fig. 1 und einer dadurch bedingten Schwenkbewegung des Übertragungshebels 24 in Fig. 2 im Uhrzeigersinn in die in Fig. 3 veranschaulichte Stellung die von der Schraubendruckfeder 19 aufgebrachte Rückstellkraft von ihrem in Betriebsstellung vorgegebenen Betriebswert entlang einer Kurve abnimmt, die mit zunehmendem Ausschwenkwinkel abfällt, und zwar zunächst schwächer, und dann stärker. Dies ist aus pflugtechnischen Gründen für Steinsicherungsvorrichtungen von Drehpflügen erwünscht.

Entsprechend der Ausführung des Übertragungshebels 24 als Doppelelement sind zwei zueinander parallele, gemeinsam und gleichförmig wirkende Verbindungslenker 35 vorgesehen, die im zweiten Angriffspunkt 36 am Übertragungshebel 24 und im dritten Angriffspunkt 37 am Druckstück 20 angreifen. Eine solche Doppelausführung der Verbindungslenker 35 vermeidet Verkantungen und schafft zudem den benötigten Freiraum für die Durchführung des Zugankers in der Betriebsstellung der Teile sowie in allen Ausschwenkstellungen.

Der bzw. jeder Verbindungslenker 35 ist bei der Steinsicherungsvorrichtung nach Fig. 1 bis 4 als eine Stellvorrichtung bildendes, längenveränderbares Bauteil ausgeführt, das zwischen dem zweiten und dem dritten Angriffspunkt 36 bzw. 37 des Koppelgetriebes 23 wirksam ist. Hierzu umfaßt der Verbindungslenker 35 eine Schraubgewindestange 38, die eine Gewindebohrung 39 in einem den zweiten Angriffspunkt am Übertragungshebel 24 bildenden Gelenkbolzen 40 durchgreift. Diese Schraubgewindestange 38 ist mit ihrem inneren Ende in einem seinerseits mit einer Gewindebohrung versehenen Anschlußstück 41 abgestützt, das im dritten Angriffspunkt 37 am Druckstück 20 gelenkig angreift, und zwar mittels eines Gelenkbolzens 42. Gegenüber diesem Anschlußstück 41 ist die Schraubgewindestange 38 durch eine Kontermutter 43 gegen Verdrehung sicherbar. An ihrem über den Gelenkbolzen 40 rückwärts vorstehenden freien Ende besitzt die Schraubgewindestange 38 eine Mehrkant-Schlüsselfläche 44.

Die vorbeschriebene Steinsicherungsvorrichtung wird bei völlig entspannter Schraubendruckfeder 19 zusammengebaut, wonach die Betriebsstellung des Übertragungshebels 24 in oben schon beschriebener Weise unter Zuhilfenahme einer Spaltlehre mit Hilfe der Stellmutter 30 eingestellt wird. Erst danach wird nun durch Verdrehen der Schraubgewindestange 38 des bzw. beider Verbindungslenker 35 das Druckstück 20 in Fig. 2 nach links so weit verschoben, bis die dadurch zusammengedrückte Schraubendruckfeder 19 jene Vorspannung erreicht hat, die dem Betriebswert der jeweils gewünschten Rückstellkraft entspricht. Danach wird die Kontermutter 43 angezogen, und die Steinsicherungsvorrichtung ist nunmehr betriebsbereit. Der Betriebswert der Rückstellkraft kann jederzeit durch Lösen der Kontermutter 43 und durch Verdrehen der Schraubgewindestange 38 erhöht bzw. ermäßigt werden, wie das die jeweiligen Bodenverhältnisse wünschenswert erscheinen lassen. Hierfür bedarf es lediglich eines Schraubenschlüssels.

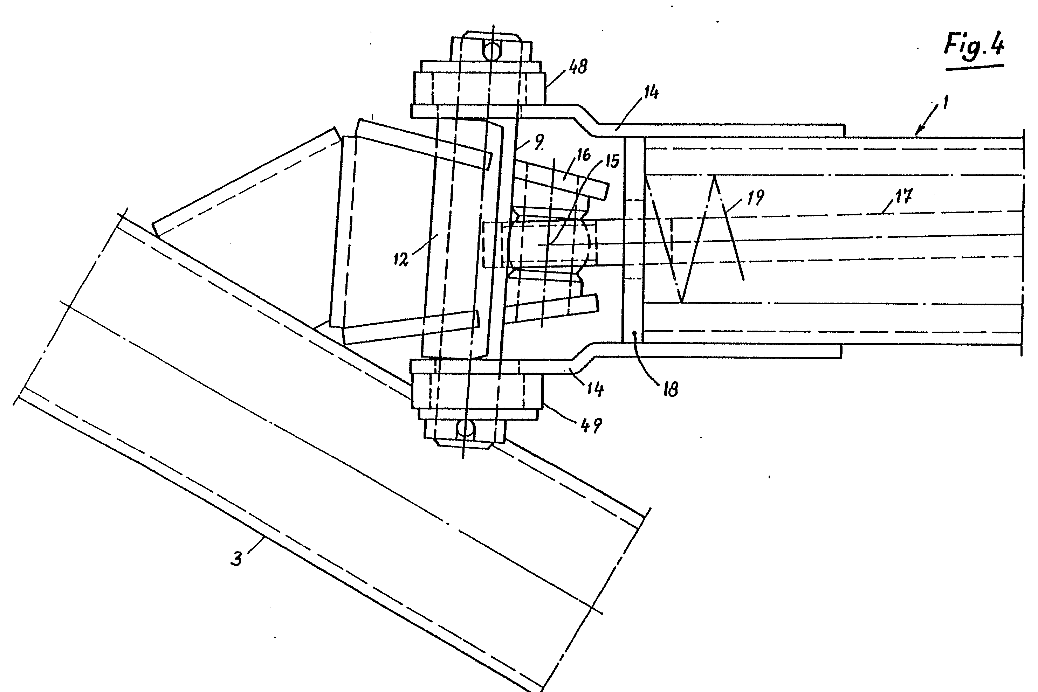

Schwenkt aufgrund eines entsprechenden Widerstandes auf ein Schar 4 im Boden der Grindel 1 in Richtung des Pfeiles 11 aus, so gelangen am Ende dieser Ausschwenkbewegung die Teile in die in Fig. 3 veranschaulichte Ausweichendstellung, hinsichtlich der noch anzumerken ist, daß diese durch einen Anschlag 45 am Übertragungshebel 24 derart begrenzt ist, daß bei Anliegen dieses Anschlages 45 an der Innenwand des Grindels 1 bzw. dessen Endteils 26 die Längsmittelachse 46 des Verbindungslenkers 35 und die Verbindungslinie 47 zwischen dem ersten und dem zweiten Angriffspunkt 27 bzw. 36 einen 180° unterschreitenden Winkel miteinander einschließen, so daß diesbezüglich keine Totpunkt- oder Übertotpunkt-Lage eintritt, die ein Zurückschwenken des Übertragungshebels 24 in seine Betriebsstellung verhindern könnte. Wie schließlich noch die Fig. 4 veranschaulicht, sind die Gelenkbolzen 9, 10 am vorderen Ende des Grindels 1 an den Knotenblechen 14 mittels mit Schrägbohrungen ausgeführten Stellbüchsen 48, 49 festgelegt, so daß durch deren Vertauschung oder durch Austausch gegen Büchsen mit anderem Bohrungswinkel der die Pflugbreite bestimmende Winkel zwischen der Längsmittelachse des Grindels 1 und dem Pflugrahmen 3 verstellbar ist.

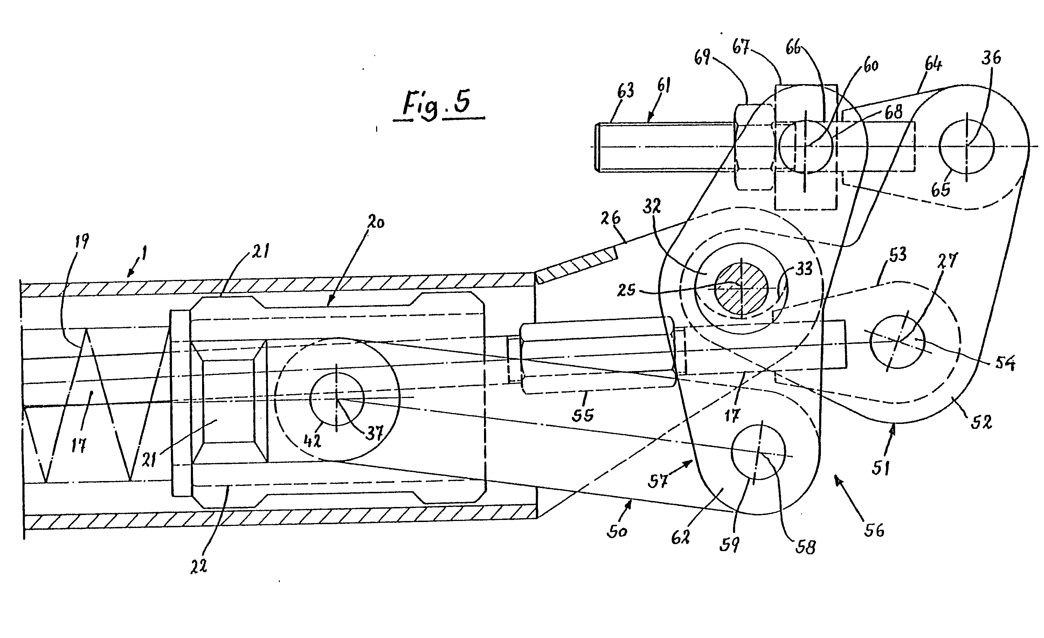

Die Fig. 5 veranschaulicht eine Steinsicherungsvorrichtung in teilweise abgewandelter Ausführung, wobei in Fig. 5 übereinstimmende oder im wesentlichen übereinstimmende Bauteile mit unverändertem Bezugszeichen gekennzeichnet sind. Anstelle eines längenveränderlichen Verbindungslenkers 35 ist bei der Ausführung nach Fig. 5 ein von zwei einfachen parallelen Laschen gebildeter Verbindungslenker 50 vorgesehen, der im dritten Angriffspunkt 37 am Druckstück 20 angelenkt ist. Der Übertragungshebel 51 ist zwar wiederum um eine ortsfeste Achse 25 mit dem rückwärtigen offenen Ende 26 des Grindels 1 schwenkbar verbunden, jedoch als Winkelhebel ausgebildet, der von zwei einfachen, im Abstand zueinander parallelen Plattenteilen 52 übereinstimmender Winkelform gebildet ist. Diese Platten sind untereinander im Bereich eines Gelenkauges 32 verbunden, das den die Achse 25 definierenden Gelenkbolzen umgibt. Am ersten der beiden Hebelarme des Übertragungshebels 51 greift im ersten Angriffspunkt 27 wiederum der Zuganker 17 an, und zwar mittels eines Anschlußstücks 53, das zwischen die Plattenteile 52 zwischengreift und einen Gelenkbolzen 54 umgreift, der sich an den Plattenteilen 52 abstützt und den Abstand zwischen diesen überbrückt. Für die Einstellung der Betriebsstellung des Übertragungshebels 51 ist der Zuganker nahe seiner Anlenkung im ersten Angriffspunkt 27 unterteilt, und die einander zugewandten Enden der Teile des Zugankers 17 sind mit Schraubgewinde versehen und durch eine Stellmutter 55 verbunden, durch deren Verdrehen der Zuganker 17 in seiner Länge veränderlich ist. Die Stellmutter 55 kann ihre Verdrehsicherung durch Verwendung selbsthemmender Gewinde oder auch durch eine nicht dargestellte Kontermutter erhalten.

Das in Fig. 5 als Ganzes mit 56 bezeichnete Koppelgetriebe umfaßt ferner einen zusätzlichen, um die Schwenkachse 25 des Übertragungshebels 51 gesondert schwenkbar am Grindel 1 angelenkten zweiarmigen Zwischenhebel 57, der an einem vierten Angriffspunkt 58 an seinem einen Hebelarm über einen Gelenkbolzen 59 mit dem Verbindungslenker 50 und an seinem anderen Hebelarm an einem fünften Angriffspunkt 60 mit einem Zwischenlenker 61 verbunden ist. Dieser Zwischenlenker 61 greift im zweiten Angriffspunkt 36 am Übertragungshebel 51 gelenkig an. Auch der Zwischenhebel 57 ist ein Doppelelement, das aus formgleichen, zueinander parallelen, um die Achse 25 schwenkbar gelagerten Plattenteilen 62 besteht, die über zwei in Fig. 5 fluchtend hintereinander-liegende Verbindungslenker 50 mit dem Druckstück 20 verbunden sind. Insgesamt umfaßt dabei der Zwischenhebel 57 zwei Paare von Plattenteilen 62.

Der Zwischenlenker 61 umfaßt eine Schraubgewindestange 63, die mit ihrem dem Übertragungshebel 51 zugewandten Ende in einem Anschlußstück 64 festgelegt ist. Dieses Anschlußstück 64 umgreift einen Gelenkbolzen 65 zwischen den Plattenteilen 52 des Übertragungshebels 51. Die Schraubgewindestange 63 durchgreift eine Bohrung 66 in einem den vierten Angriffspunkt 60 am Zwischenhebel 57 bildenden Gelenkstück 67, das mit beidseits vorstehenden koaxialen Gelenkbolzen 68 die beidseits angeordneten Paare von Plattenteilen 62 des Zwischenhebels 57 durchgreift und dementsprechend an diesen gelagert ist. Auf ihrem durch das Gelenkstück 67 hindurchgeführten freien, in Fig. 5 nach links weisenden Teil trägt die Schraubgewindestange 63 des Zwischenlenkers 61 eine Stellmutter 69, durch deren Verdrehen die Rückstellkraft der Schraubendruckfeder 19 einstellbar ist. Die Verdrehsicherung für die Stellmutter 69 kann durch Verwendung von selbsthemmenden Gewinden bzw. durch Verwendung einer nicht dargestellten Kontermutter erfolgen.

Nach Montage der Teile bei wiederum völl entspannter Schraubendruckfeder 19 wird ähnlich wie oben schon erläutert mit Hilfe einer Spaltlehre und mit Hilfe der Stellmutter 55 die Betriebsstellung für den Übertragungshebel 51 eingestellt, wonach dann anschließend mit Hilfe der Stellmutter 69 die Einstellung des Betriebswertes der Rückstellkraft der Schraubendruckfeder 19 erfolgt. Dabei wirkt der Übertragungshebel zunächst wie ein starres Widerlager, wenn durch fortschreitendes Aufschrauben der Stellmutter 69 auf der Schraubgewindestange 63 der Zwischenhebel in Fig. 5 im Uhrzeigersinn geschwenkt und über die Verbindungslenker 50 das Druckstück in Fig. 5 nach links verschoben wird und die Schraubendruckfeder 19 entsprechend vorspannt. Diese Ausführung in Fig. 5 ist zwar im Vergleich zu der nach Fig. 1 bis 4 baulich aufwendiger, hat jedoch den zusätzlichen Vorteil, daß zur Einstellung der Rückstellkraft der Schraubendruckfeder nur eine einzige Stellschraube 69 zu betätigen ist. Ferner kann zur Beeinflussung des Verlaufs der Rückstellkraft über dem Ausschwenkwinkel des Grindels 1 der Zwischenhebel 57 auch noch als Über- bzw. Untersetzungshebel eingesetzt werden, wenn man die Abstände zwischen den Angriffspunkten 58 bzw. 60 zur Achse 25 ungleichförmig wählt.

In manchen Fällen kann es bei steinarmen, jedoch schweren Böden wünschenswert sein, eine Vorrichtung zum Verriegeln des in Betriebsstellung befindlichen Übertragungshebels gegen eine mit einem Ausschwenken des Grindels 1 auftretende Schwenkbewegung einzusetzen. In diesem Falle wirkt das eingestellte Rückstellmoment auf das Schar, und die Verriegelungsvorrichtung stellt sicher, daß auch bei Überschreiten dieses Rückstellmomentes die Steinsicherungsvorrichtung nicht ansprechen kann. Dies ist um so bedeutungsvoller, als gerade wegen des Vorsehens des Koppelgetriebes die Schraubendruckfeder in der Regel geringer dimensioniert werden kann und möglicherweise nicht ausreicht, um beim Pflugbetrieb in sehr schweren Böden das Schar zuverlässig in seiner Betriebsstellung zu halten.

Eine besonders einfache Ausführung der Verriegelungsvorrichtung kann von einem in fluchtende Bohrungen des Grindels 1 einsetzbaren Querstecker 85 gebildet sein, der in Fig. 1 und 2 schematisch veranschaulicht ist.

## Patentansprüche

1. Steinsicherungsvorrichtung für Drehpflüge mit zumindest einem aus einer Betriebsstellung um eine Gelenkachse (9 ; 10) gegen eine Rückstellkraft in eine Ausweichstellung ausschwenkbar am Pflugrahmen (3) angelenkten, Pflugschare (4) tragenden rohrförmigen Grindel (1), die eine im Grindel (1) unter Vorspannung abgestützte, die Rückstellkraft erzeugende Schraubendruckfeder (19), ein auf ein Ende der Schraubendruckfeder (19) einwirkendes, im Grindel längsverschieblich geführtes Druckstück (20), einen am Pflugrahmen (3) angreifenden Zuganker (17) und ein eine Antriebsübertragung zwischen dem Zuganker (17) und dem Druckstück (20) bildendes, am rückwärtigen Ende des Grindels (1) angeordnetes Koppelgetriebe (23 ; 56) aufweist, das einen am Grindel (1) um eine ortsfeste Achse (25) schwenkbar gelagerten zweiarmigen Übertragungshebel (24 ; 51) und einen Verbindungslenker (35, 61) umfaßt, wobei der Übertragungshebel (24 ; 51) an einem ersten Angriffspunkt (27) mit dem Zuganker (17) und an einem zweiten Angriffspunkt (36) über den Verbindungslenker (35, 61) mit dem einen dritten Angriffspunkt (37) aufweisenden Druckstück (20) gekoppelt ist, dadurch gekennzeichnet, daß zwischen dem zweiten (36) und dem dritten (37) Angriffspunkt im Koppelgetriebe (23 ; 56) eine vom längenveränderlich ausgeführten Verbindungslenker (35 ; 61) gebildete Stellvorrichtung angeordnet ist, mittels der die Rückstellkraft der Schraubendruckfeder (19) im Bereich zwischen dem Wert Null und einem vorgegebenen maximalen Betriebswert veränderbar ist.

2. Vorrichtung nach Anspruch 1, dadurch gekennzeichnet, daß der Verbindungslenker (35) eine Schraubgewindestange (38) umfaßt, die eine Gewindebohrung (39) in einem den zweiten Angriffspunkt (36) am Übertragungshebel (24) bildenden Gelenkbolzen (40) durchgreift, mit ihrem inneren Ende in einem im dritten Angriffspunkt (37) am Druckstück (20) angreifenden Anschlußstück (41) abgestützt und diesem gegenüber gegen Verdrehung sicherbar ist.

3. Vorrichtung nach Anspruch 2, dadurch gekennzeichnet, daß die Schraubgewindestange (38) an ihrem über den Gelenkbolzen (40) vorstehenden freien Ende eine Mehrkant-Schlüsselfläche (44) aufweist.

4. Vorrichtung nach einem der Ansprüche 1 bis 3, dadurch gekennzeichnet, daß der Zuganker (17) durch eine Bohrung (29) in einem den ersten Angriffspunkt (27) am Übertragungshebel (24) bildenden Gelenkbolzen (28) hindurchgeführt ist, an seinem über den Gelenkbolzen vorstehenden freien Ende ein Schraubgewinde aufweist und auf diesem eine in ihren Stellungen festlegbare Stellmutter (30) vorgesehen ist.

5. Vorrichtung nach Anspruch 1, dadurch gekennzeichnet, daß das Koppelgetriebe zusätzlich einen um die Schwenkachse (25) des Übertragungshebels (51) gesondert schwenkbar am Grindel (1) angelenkten zweiarmigen Zwischenhebel (57) umfaßt, der an einem vierten Angriffspunkt (58) einerseits mit einem längenunveränderlichen Verbindungslenker (50) und an einem fünften Angriffspunkt (60) andererseits mit dem längenveränderbaren Zwischenlenker (61) verbunden ist, der im zweiten Angriffspunkt (36) am Übertragungshebel (51) angreift.

6. Vorrichtung nach Anspruch 5, dadurch gekennzeichnet, daß der Zwischenlenker (61) als Schraubgewindestange (63) ausgebildet ist, die eine Bohrung (66) in einem den vierten Angriffspunkt (60) am Zwischenhebel (57) bildenden Gelenkstück (67) durchgreift, auf ihrem durch das Gelenkstück hindurchgeführten freien Teil eine Stellmutter (69) trägt und in einem dem zweiten Angriffspunkt (36) am Übertragungshebel zugeordneten Anschlußstück (64) festgelegt ist.

7. Vorrichtung nach Anspruch 5 oder 6, dadurch gekennzeichnet, daß der Zuganker (17) nahe seiner Anlenkung im ersten Angriffspunkt (27) des Übertragungshebels (51) unterteilt ist, und die einander zugewandten, mit Schraubgewinde versehenen Enden zur Längenveränderung des Zugankers durch eine Stellmutter (55) verbunden sind.

8. Vorrichtung nach einem oder mehreren der Ansprüche 1 bis 7, gekennzeichnet durch eine Vorrichtung (85) zum Verriegeln des in Betriebsstellung befindlichen Übertragungshebels (24 ; 51) gegen eine mit einem Ausschwenken des Grindels (1) auftretende Schwenkbewegung.

9. Vorrichtung nach Anspruch 8, dadurch gekennzeichnet, daß die Verriegelungsvorrichtung von einem in fluchtende Bohrungen des Grindels (1) einsetzbaren Querstecker (85) gebildet ist.

**Claims**

1. A stone-proofing device for turn-over ploughs having at least one tubular plough-beam (1), which is articulated on the plough frame (3) for swinging about a pivot pin (9, 10) out of an operating position, against a restoring force, into an avoiding position and carries ploughshares (4), which device comprises a helical compression spring (19) supported in the plough-beam (1) under initial loading and producing the restoring force, a thrust member (20) acting on one end of the helical compression spring (19) and guided for longitudinal displacement in the ploughbeam, a tension rod (17) acting on the plough frame (3) and a driving linkage (23 ; 56) forming a transmission for the drive between the tension rod (17) and the thrust member (20) and disposed at the rear end of the plough-beam (1), which driving linkage comprises a two-armed transmission lever (24 ; 51), mounted on the plough-beam (1) for pivoting about a stationary spindle (25), and a connecting link (35, 61), the transmission lever (24 ; 51) being coupled, at a first point of action (27), to the tension rod (17) and, at a second point of action (36), via the connecting link (35, 61), to the thrust member (20) having a third point of action (37), characterised in that disposed between the second (36) and the third (37) points of action in the driving linkage (23 ; 56) is an adjusting device which is formed from the connecting link (35 ; 61) made variable in length and by means of which the restoring force of the helical compression sping (19) is variable in the range between the value zero and a preset maximum operating value.

2. A device as claimed in claim 1, characterised in that the connecting link (35) comprises a screwthreaded rod (38) which engages through a tapped bore (39) in a pivot pin (40) forming the second point of action (36) on the transmission lever (24) and which is supported, by its inner end, in a connecting member (41) acting on the thrust member (20) in the third point of action (37), and can be secured against torsion in relation to this.

3. A device as claimed in claim 2, characterised in that the screw-threaded rod (38) comprises a polygonal spanner seat (44) at its free end projecting beyond the pivot pin (40).

4. A device as claimed in one of the claims 1 to 3, characterised in that the tension rod (17) is taken through a bore (29) in a pivot pin (28) forming the first point of action (27) on the transmission lever (24), comprises a screw thread at its free end projecting beyond the pivot pin and an adjusting nut (30), which can be located in its positions, is provided on this screw thread.

5. A device as claimed in claim 1, characterised in that the driving linkage additionally comprises a two-armed intermediate lever (57) which is articulated on the plough-beam (1) for separate pivoting about the pivot pin (25) of the transmission lever (51) and which is connected, on the one hand, at a fourth point of action (58), to a connecting link (50) which is invariable in length and, on the other hand, at a fifth point of action (60), to the intermediate link (61) which is variable in length and which acts on the transmission lever (51) in the second point of action (36).

6. A device as claimed in claim 5, characterised in that the intermediate link (61) is constructed in the form of a screw-threaded rod (63) which engages through a bore (66) in an articulation member (67) forming the fourth point of action (60) on the intermediate lever (57), carries an adjusting nut (69) on its free portion taken through the articulation member and is located in a connecting member (64) associated with the second point of action (36) on the transmission lever.

7. A device as claimed in claim 5 or 6, characterised in that the tension rod (17) is divided close to its articulation in the first point of action (27) of the transmission lever (51), and the adjacent ends, provided with screw threads, are connected by an adjusting nut (55) to vary the length of the tension rod.

8. A device as claimed in one or more of the claims 1 to 7, characterised by a device (85) to lock the transmission lever (24 ; 51), when it is in the operating position, against a pivotal movement occurring when the plough-beam (1) is swung out.

9. A device as claimed in claim 8, characterised in that the locking device is formed by a transverse pin (85) which can be inserted in aligned bores in the plough-beam (1).

## Revendications

1. Dispositif de sécurité contre les blocs de pierre pour des charrues brabant, avec au moins un timon tubulaire (1), articulé sur le bâti (3) de la charrue de façon à pouvoir pivoter autour d'un axe d'articulation (9, 10), contre une force de rappel, à partir d'une position de fonctionnement dans une position d'évitement, et portant les socs de charrue (4), dispositif comportant un ressort hélicoïdal de pression (19), prenant appui sous précontrainte dans le timon (1) et engendrant la force de rappel, une pièce de pression (20), agissant sur une extrémité du ressort hélicoïdal de pression (19) et guidée de façon à pouvoir coulisser longitudinalement dans le timon, un tirant d'ancrage (17) venant en prise sur le bâti (3) de la charrue, et un mécanisme à bielle (23, 56) assurant une transmission d'entraînement entre le tirant d'ancrage (17) et la pièce de pression (20) et qui est disposé à l'extrémité arrière du timon (1), ce mécanisme comprenant un levier de transmission à deux bras (24, 51) et un bras oscillant de liaison (35, 61), le levier de transmission (24, 51) étant couplé à un premier point d'attaque (27) avec le tirant d'ancrage (17) et à un second point d'attaque (36) par l'intermédiaire du bras oscillant de liaison (35, 61) avec la pièce de pression (20) comportant un troisième point d'attaque (37), dispositif caractérisé en ce qu'entre le second point d'attaque (36) et le troisième point d'attaque (37) dans le mécanisme à bielle (23, 56) est disposé un moyen de réglage constitué par le bras oscillant de liaison (35, 61), réalisé de façon à pouvoir être modifié en longueur, et au moyen duquel la force de rappel du ressort hélicoïdal de pression (19) est susceptible d'être modifiée dans une étendue comprise entre la valeur zéro et une valeur maximale de fonctionnement prédéfinie.

2. Dispositif selon la revendication 1, caractérisé en ce que le bras oscillant de liaison (35) comprend une tige filetée (38) qui traverse un perçage fileté (39) dans un axe d'articulation (40) constituant le second point d'attaque (36) sur le levier de transmission (24), et dont l'extrémité interne prend appui sur une pièce de raccordement (41) venant en prise sur la pièce de pression (20) au troisième point d'ancrage (37), la tige (38) étant bloquée en rotation sur la pièce de raccordement (41).

3. Dispositif selon la revendication 2, caractérisé en ce que la tige filetée (38) comporte à son extrémité libre, faisant saillie au-delà de l'axe d'articulation (40) une surface polygonale pour une clé.

4. Dispositif selon une des revendications 1 à 3, caractérisé en ce que le tirant d'ancrage (17) traverse un perçage (29) dans un axe d'articulation (28) constituant le premier point d'attaque (27) sur le levier de transmission (24), et comporte à son extrémité libre faisant saillie au-delà de l'axe d'articulation, un filetage sur lequel est prévu un écrou de réglage (30), susceptible d'être bloqué dans ses positions.

5. Dispositif selon la revendication 1, caractérisé en ce que le mécanisme à bielle comprend, en outre, un levier intermédiaire à deux bras (57), articulé sur le timon (1) de façon à pouvoir pivoter séparément autour de l'axe de pivotement (25) du levier de transmission (51), et qui est relié, d'une part, à un quatrième point d'attaque (58), avec un bras oscillant de liaison de longueur non modifiable (50), et, d'autre part, à un cinquième point d'attaque (60), avec le bras oscillant intermédiaire de longueur modifiable (61), qui vient en prise sur le levier de transmission (51) au second point d'attaque (36).

6. Dispositif selon la revendication 5, caractérisé en ce que le bras oscillant intermédiaire (61) revêt la forme d'une tige filetée (63) qui traverse un perçage (66) dans une pièce d'articulation (67) constituant le quatrième point d'attaque (60) sur le levier intermédiaire (57), cette tige filetée (63) portant sur sa partie libre, passant à travers la pièce d'articulation, un écrou de réglage (69) et étant fixée dans une pièce de raccordement (64) associée au second point d'attaque (36) sur le levier de transmission.

7. Dispositif selon la revendication 5 ou 6, caractérisé en ce que le tirant d'ancrage (17) est divisé au voisinage de son articulation sur le premier point d'attaque (27) du levier de transmission (51) et ses deux extrémités, tournées l'une vers l'autre et munies d'un filetage, sont reliées par un écrou de réglage (55) afin de permettre de modifier la longueur du tirant d'ancrage.

8. Dispositif selon une ou plusieurs des revendications 1 à 7, caractérisé en ce qu'il comporte un moyen (85) pour le verrouillage, contre un mouvement de pivotement survenant avec un basculement du timon (1), du levier de transmission (24, 51) se trouvant dans la position de fonctionnement.

9. Dispositif selon la revendication 8, caractérisé en ce que le moyen de verrouillage est constitué par une fiche transversale (85) susceptible d'être mise en place dans des perçages alignés du timon (1).

_Fig.1_

0 123 067

_Fig. 2_

0 123 067

Fig. 3

0 123 067

Fig.4

4

_Fig.5_

0 123 067